# EUROPEAN PATENT APPLICATION

(11) **EP 1 569 493 A2**
(43) Date of publication of application: **31.08.2005**
(21) Application number: 05250724.1
(22) Date of filing: 09.02.2005
(51) Int. Cl.: H04Q 7/38

(54) **Multimedia Messaging system for not reachable 3G voice terminals**

(30) Priority: 24.02.2004 GB 0404107
(71) Applicant: Vodafone Group PLC, Berkshire RG14 2FN (GB)
(72) Inventor: Carter, Phillip, Wallingford Oxfordshire OX10 0HQ (GB)
(74) Representative: Foster, Mark Charles

(57) **Abstract**

A cellular telephony system is described, having possibly overlapping 3G and 2G service areas together with 3G and 2G handsets having inter-operability at least as far as voice calls are concerned. At least some of the 3G handsets have voice telephony (VT) capability, so that each of these handsets is able to communicate with another similarly equipped 3G handset when in a 3G service area - though not able to communicate with a similarly equipped 3G handset when it is off or unreachable in a 3G service area or when in a 2G service area - and not able at all to make VT communication with a 2G handset. The system provides a VT mailbox for receiving, storing and forwarding a VT call when addressed to a 3G handset with VT capability but not currently able to receive the VT call (because it is switched off or unreachable in a 3G service area or is in a 2G service area). If the VT call is directed to a handset not having VT capability, the system automatically invites the caller to leave a message for forwarding to the called handset, which may be a voice message or may be a video message based on the VT call and sent as an MMS message or possibly as an emailed link.

## Description

The invention relates to wireless communication and more particularly to mobile telecommunications systems such as cellular radio telephony systems. Embodiments of the invention to be described in more detail below by way of example only are used to facilitate the making of video telephony calls between portable terminals in a cellular radio telecommunications system.

According to the invention, there is provided a cellular telecommunications system, comprising first network means providing a plurality of first service areas, second network means providing a plurality of second service areas, a plurality of first and second portable terminals each capable of making and receiving the same predetermined types of call when active in any one of the first service areas and any one of the second service areas, at least some selected ones of the first portable terminals each being capable of making and receiving an additional type of call but only in any one of the first service areas when active therein, none of the second portable terminals being so capable, special mailbox means defining a mailbox for each of the selected ones of the first portable terminals for storing and forwarding calls of the additional type sent thereto when the portable handset is not active in a said first service area, and control means operative in response to a said additional type of call addressed to one of the portable terminals not being in the selected group thereof to enable information corresponding to at least part of the call to be forwarded to that handset in the form of one of the said predetermined types of call.

According to the invention, there is further provided a cellular telecommunications system, comprising 3G network means providing a plurality of 3G service areas, 2G network means providing a plurality of 2G service areas, a plurality of 3G and 2G handsets, each of the handsets being at least capable of voice call communication with any other of the handsets when active in any of the service areas, each of a selected group of the 3G handsets being capable of video telephony call communication with another 3G handset of that group when active in a 3 G service area but not otherwise, means providing a video mailbox for each of the 3G handsets in the selected group thereof for receiving, storing and forwarding a video telephony message for that handset from another 3G handset of the selected group, and means responsive to a video telephony call directed by one of the 3G handsets in the selected group to another handset outside that group to produce a message representing the video telephony call and for forwarding it to that other handset.

According to the invention, there is also provided a cellular telecommunications method for use with a first network comprising a plurality of first service areas, a second network comprising a plurality of second service areas, a plurality of first and second portable terminals each capable of making and receiving the same predetermined types of call when active in any one of the first service areas and any one of the second service areas, at least some selected ones of the first portable terminals each being capable of making and receiving an additional type of call but only in any one of the first service areas when active therein, none of the second portable terminals being so capable, the method defining a special mailbox for each of the selected ones of the first portable terminals for storing and forwarding calls of the additional type sent thereto when the portable handset is not active in a said first service area, and being operative in response to a said additional type of call addressed to one of the portable terminals not being in the selected group thereof to enable information corresponding to at least part of the call to be forwarded to that handset in the form of one of the said predetermined types of call.

According to the invention, there is yet further provided a cellular telecommunications method for use with 3G network means providing a plurality of 3G service areas, 2G network means providing a plurality of 2G service areas, and a plurality of 3G and 2G handsets, each of the handsets being at least capable of voice call communication with any other of the handsets when active in any of the service areas, each of a selected group of the 3G handsets being capable of video telephony call communication with another 3G handset of that group when active in a 3G service area but not otherwise, the method providing a video mailbox for each of the 3G handsets in the selected group thereof for receiving, storing and forwarding a video telephony message for that handset, from another 3G handset of the selected group, and being responsive to a video telephony call directed by one of the 3G handsets in the selected group to another handset outside that group to produce a message representing the video telephony call and for forwarding it to that other handset.

Cellular radio telecommunications systems and methods according to the invention, for handling video telephony calls between communication terminals used therein, will now be described, by way of example only, with reference to the accompanying diagrammatic drawings in which:
Figures 1A to 1E show various possible situations which can arise in the systems and methods to be described, for use in explaining how such calls are processed in the different situations; and
Figure 2 is a block diagram for explaining the operation of the systems and methods in more detail.

The systems and methods to be described support portable terminals (which may, for example, be telephone handsets and will be referred to as such in the following description) which are capable of inter-operability in different types of networks used in the systems and methods, the handsets having different operative capabilities. More specifically, some of the handsets have the capability of making and receiving video telephony (VT) calls and others do not have that capability. In addition, one or some of the networks have the capability of supporting VT calls and another or others of the networks does or do not have that capability. The networks co-exist within the same geographical region and provide respective cellular service areas which may geographically overlap.

In use, the handsets of the different types may move between different ones of the networks. In general, a handset with VT capability, and wishing to make a VT call to another handset will not know (a) whether that other handset has VT capability and/or (b) whether the handset is currently situated within a service area of a network supporting VT calls or is currently situated in a service area of a network not supporting such calls. Clearly, therefore, situations will arise in which a VT call set up by a handset having that capability fails. The systems and methods to be described are intended to deal with that problem.

In a more specific example, and one which is currently or imminently applicable, the systems and methods to be described involve both 3G GSM networks and handsets and 2G GSM networks and handsets. 3G and 2G handsets are in principle capable of voice call communication and by messaging (e.g. MMS) with each other whether located in a 3G or in a 2G service area. However, 2G handsets do not support VT calls. VT calls are sent as circuit-switched data calls and are supported by 3G networks but not by 2G networks. Therefore, a 3G handset cannot send or receive a VT call when in a 2G service area. Some but not all 3G handsets will support VT calls.

In the systems and methods to be described, a geographical region will be covered by a combination of 3G and 2G service areas. In general, 3G service areas will be limited in size and, initially, restricted to urban and similar areas of relatively high population density, while there will in general be 2G service over substantially the whole geographical region. Each handset, in moving throughout the region, will therefore move between 3G service areas and 2G service areas. This will in principle not adversely affect voice calls, because each 3G handset will effectively be capable of operating as a 2G handset when this is necessary (in order to enable it to communicate with another 2G handset or with another handset, whether a 3G or a 2G handset, which is located in an area only covered by a 2G service area). Therefore, references in this description to a "3G handset" are references to a handset having both 3G and 2G voice-call operability and thus capable of communicating by voice call with both 3G and 2G handsets. As indicated above, though, this relatively seamless operation for voice calls is not applicable for VT calls.

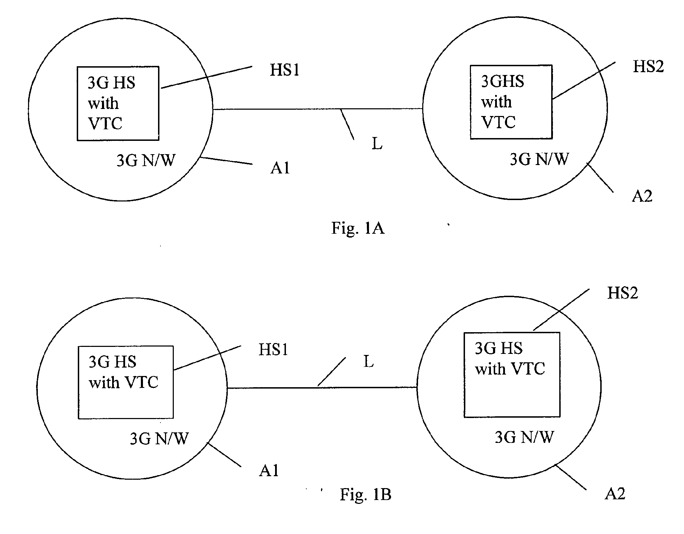

Some of the different possible situations which can arise will be described with reference to Figures 1A to 1E.

Figure 1A illustrates a 3G handset HS1 which is assumed have VT capability. Handset HS1 is shown as being located within a 3G service area A1.

In Figure 1A, handset HS1 is shown communicating with a handset HS2. Handset HS2 is assumed to be similar to handset HS1 in that handset HS2 is also a 3G handset with VT capability. In addition, handset HS2, like handset HS1, is currently situated in a service area A2 which, like area A1, is a 3G service area. Handset HS1 can thus initiate a VT call to handset HS2, the transmission taking place over a circuit-switched link L. Obviously, also, handset HS2 could initiate a VT call to handset HS1.

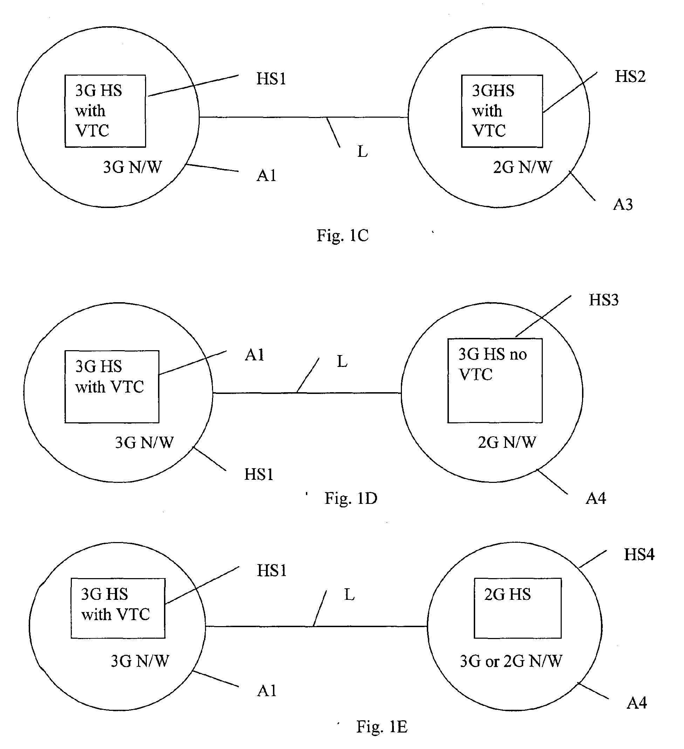

In Figure 1B, handset HS1 is again located within the 3G service area A1. Now, however, it is assumed that handset HS2, still located within 3G service area A2, is busy, switched off or otherwise not reachable. Therefore, a VT call from handset HS1 will fail. In Figure 1C, handset HS1 is again shown as being located in a 3G service area A1. It is now assumed, however, that handset HS2 is located in a 2G service area A3. The area A3 will not support circuit-switched data calls and a VT call initiated by handset HS1 will therefore fail.

In Figure 1D, the handset HS1 is again located in the 3G service area A1. Now, however, it is attempting to communicate with a handset HS3 which is assumed to be a 3G handset without VT capability. Handset HS3 is shown located in an area A4 which may be a 3G service area or a 2G service area. Because handset HS3 does not have VT capability, any attempt by handset HS1 to set up a VT call to handset HS3 will fail.

Figure 1E again shows handset HS1 located in 3G service area A1. It is now attempting to communicate with a handset HS4. Handset HS4 is assumed to be a 2G handset and thus has no VT capability. Handset HS4 is located within service area A4 which may be a 3G service area or 2G service area. Because handset HS4 is a 2G handset, and thus by definition has no VT capability, any attempt at a VT call by handset HS1 to handset HS4 will fail.

It will be apparent from the foregoing that, in a situation when 3G service areas cover only a relatively small part of the geographical region, and when 3G handsets with VT capability are comparatively few in number, the chances are high that attempts by 3G handsets with VT capability to set up VT calls will fail, thus tending to provide a poor customer experience. In order to deal with this problem, the systems and methods being described provide a video mailbox service for 3G handsets having VT capability. In addition, a software application is provided which automatically directs VT calls to such a handset's video mailbox in the case of failure of a VT call (such as in the cases described with reference to Figures 1B and 1C), and, where the called handset does not have VT capability, it automatically enables a message to be sent to the called handset: for example, the caller may be invited to send a voice message to the called handset's voice mailbox, or a video message may be sent (for example, by MMS or as a link sent by an email) to the called handset, this video message being automatically composed on the basis of the VT call.

In this way, the software application ("the VTA") aims to complete all VT calls, irrespective of the status of the called handset (whether or not it has VT capability and whether it is located in a 3G service area or in a 2G service area). As is apparent from the above description, completion of the VT call does not necessarily mean that the VT call itself is received by the called handset. However, (if it is not actually received, the VT call is either recorded in the called party's video mailbox for subsequent receipt or is received or subsequently received by the called party as a video email or MMS, or a voicemail message may be sent. The VTA thus aims to eliminate, or at least substantially reduce, the number of times that a VT call initiated by a 3G handset with VT capability simply ends in a "no-connection" failure.

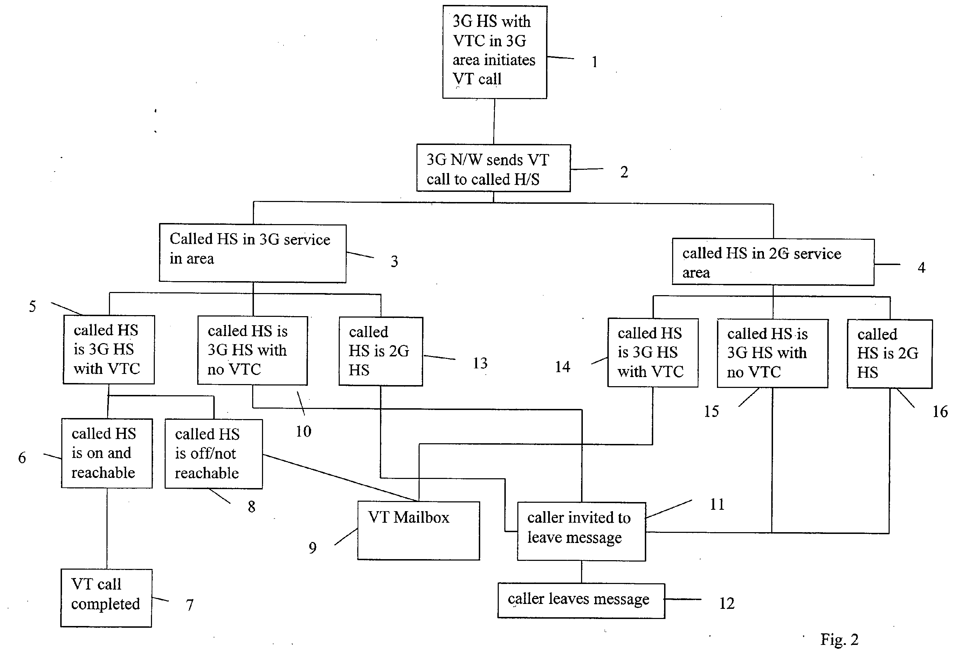

The operation of the VTA is explained in more detail with reference to the block diagram of Figure 2. In Figure 2, the same abbreviations as in Figures 1A to 1E are used.

It is assumed that a 3G handset with VT capability and currently located in a 3G service area initiates a VT call (block 1) to a called handset. The calling handset does not know whether the called handset has VT capability and does not know whether it is located in a 3G service area or a 2G service area.

The 3G network now sends the VT call to the called handset (block 2).

The called handset may be in a 3G service area (block 3) or in a 2G service area (block 4). It will initially be assumed that the called handset is in a 3G service area.

The called handset may be a 3G handset with VT capability (block 5).

If this called handset is switched on and is reachable (block 6), the VT call initiated by the calling handset (block 1) can now be connected (block 7).

However, if the called handset (block 5) is switched off, is busy, or is otherwise unreachable (block 8), the initiated VT call cannot be connected. Therefore, the VTA automatically directs the VT call to the called handset's VT mailbox (block 9), and the calling handset (block 1) is able to leave a VT message which the called handset can recover later when reachable (in the same way as a handset recovers a voice mail message).

Instead, the called handset may be a 3G handset with no VT capability (block 10). In this case, it is not possible for the calling handset (block 1) to make a VT call to the called handset. The VTA therefore now (block 11) invites the calling handset (block 1) to leave a message for the called handset, in the same way as for a voice mail message.

On completion of the message left by the calling handset, the VTA ends the VT call and automatically composes a video message (e.g. email or MMS) comprising the video message and forwards it to the called handset (block 12).

If the called handset is a 2G handset (block 13), it will also not have VT capability. Again, therefore, the called handset is invited to leave a message (block 11) which is then composed by the VTA in the manner explained above and forwarded to the called handset (block 12).

Instead of being located in a 3G service area (block 3), the called handset may be located in a 2G service area (block 4).

If the called handset is a 3G handset with VTC (block 14) then it will in principle be able to receive the VT call (when it has moved to a 3G service area). Therefore, the call is diverted to the called handset's VT mailbox (block 9), and the caller then leaves a VT message in the mailbox which the called handset can retrieve later when it becomes located in a 3G service area.

If the called handset is a 3G handset with no VT capability (block 15) or is a 2G handset (which, by definition, has no VT capability) (block 16), then in each case the calling handset cannot send a VT call. Accordingly, the VTA invites the calling handset to leave a message for the called handset (block 11), like a voice mail message. As already explained, the VTA automatically ends the VT call after the message has been left, and automatically composes a video message (e.g. email or MMS) comprising the video message and forwards it to the called handset (block 12).

The video mailbox will be network-based. A handset having VT capability may set up an automatic divert, which causes the VTA to divert all VT calls to that handset to its video mailbox - for example, an automatic divert may be set up if the user of the handset knows that it will be roaming from a 3G service area to a 2G service area.

## Claims

1. A cellular telecommunications system, comprising
first network means providing a plurality of first service areas,
second network means providing a plurality of second service areas,
a plurality of first and second portable terminals each capable of making and receiving the same predetermined types of call when active in any one of the first service areas and any one of the second service areas,
at least some selected ones of the first portable terminals each being capable of making and receiving an additional type of call but only in any one of the first service areas when active therein, none of the second portable terminals being so capable,
special mailbox means defining a mailbox for each of the selected ones of the first portable terminals for storing and forwarding calls of the additional type sent thereto when the portable handset is not active in a said first service area, and
control means operative in response to a said additional type of call addressed to one of the portable terminals not being in the selected group thereof to enable information corresponding to at least part of the call to be forwarded to that handset in the form of one of the said predetermined types of call.

2. A system according to claim 1, in which some of the first and second service areas overlap each other.

3. A system according to claim 1 or 2, in which the additional type of call comprises video telephony calls.

4. A system according to claim 3, in which the predetermined types of call comprise voice telephony calls and predetermined types of messages.

5. A system according to claim 4, in which the predetermined types of message include an MMS message and a link included in an email.

6. A system according to any preceding claim, in which the special mailbox means for each of the selected group of first portable terminals is held by the first network means.

7. A system according to any preceding claim, in which the first network means is 3G network means and the second network means is 2G network means.

8. A cellular telecommunications system, comprising 3G network means providing a plurality of 3G service areas, 2G network means providing a plurality of 2G service areas, a plurality of 3G and 2G handsets, each of the handsets being at least capable of voice call communication with any other of the handsets when active in any of the service areas, each of a selected group of the 3G handsets being capable of video telephony call communication with another 3G handset of that group when active in a 3G service area but not otherwise, means providing a video mailbox for each of the 3G handsets in the selected group thereof for receiving, storing and forwarding a video telephony message for that handset from another 3G handset of the selected group, and means responsive to a video telephony call directed by one of the 3G handsets in the selected group to another handset outside that group to produce a message representing the video telephony call and for forwarding it to that other handset.

9. A system according to claim 8, in which the message includes an MMS message.

10. A system according to claim 9, in which the message includes an email comprising a link to a stored representation of the video telephony call.

11. A cellular telecommunications method for use with a first network comprising a plurality of first service areas, a second network comprising a plurality of second service areas, a plurality of first and second portable terminals each capable of making and receiving the same predetermined types of call when active in any one of the first service areas and any one of the second service areas, at least some selected ones of the first portable terminals each being capable of making and receiving an additional type of call but only in any one of the first service areas when active therein, none of the second portable terminals being so capable, the method defining a special mailbox for each of the selected ones of the first portable terminals for storing and forwarding calls of the additional type sent thereto when the portable handset is not active in a said first service area, and being operative in response to a said additional type of call addressed to one of the portable terminals not being in the selected group thereof to enable information corresponding to at least part of the call to be forwarded to that handset in the form of one of the said predetermined types of call.

12. A method according to claim 11, in which some of the first and second service areas overlap each other.

13. A method according to claim 11 or 12, in which the additional type of call comprises video telephony calls.

14. A method according to claim 13, in which the predetermined types of call comprise voice telephony calls and predetermined types of messages.

15. A method according to claim 14, in which the predetermined types of message include an MMS message and a link included in an email.

16. A method according to any one of claims 11 to 15, in which the special mailbox for each of the selected group of first portable terminals is held by the first network means.

17. A method according to any one of claims 11 to 16, in which the first network means is 3G network means and the second network means is 2G network means.

18. A cellular telecommunications method for use with 3G network means providing a plurality of 3G service areas, 2G network means providing a plurality of 2G service areas, and a plurality of 3G and 2G handsets, each of the handsets being at least capable of voice call communication with any other of the handsets when active in any of the service areas, each of a selected group of the 3G handsets being capable of video telephony call communication with another 3G handset of that group when active in a 3G service area but not otherwise, the method providing a video mailbox for each of the 3G handsets in the selected group thereof for receiving, storing and forwarding a video telephony message for that handset, from another 3G handset of the selected group, and being responsive to a video telephony call directed by one of the 3G handsets in the selected group to another handset outside that group to produce a message representing the video telephony call and for forwarding it to that other handset.

19. A method according to claim 18, in which the message includes an MMS message.

20. A method according to claim 19, in which the message includes an email comprising a link to a stored representation of the video telephony call.
